# EUROPEAN PATENT APPLICATION

(11) **EP 1 113 437 A1**
(43) Date of publication of application: **04.07.2001**
(21) Application number: 00403667.9
(22) Date of filing: 22.12.2000
(51) Int. Cl.: G11B 23/00, G11B 23/03, G11B 5/82

(54) **Flexible disk stabilization using edge stiffener**

(30) Priority: 29.12.1999 US 473557
(71) Applicant: IOMEGA CORPORATION, Roy, UT 84067 (US)
(72) Inventor: Ma Yiping, Layton, Utah 84040 (US); Thayne Mark S., West Point, Utah (US)
(74) Representative: Cabinet Hirsch

(57) **Abstract**

An edge stiffener, such as an annular ring, is attached to a disk at its outer periphery to cause at least one standing wave to form and prevents mode snap during operation. The annular ring preferably comprises a polyester film and is preferably attached to the periphery of the disk by pressure sensitive adhesives. The annular ring can be attached to the top of the disk, or to both the top and bottom of the disk. Alternatively, instead of using an annular ring, the outer edge or periphery of the disk can be deformed to provide the desired additional stiffness and vibration suppression ability. Exemplary deformations include a channel, a notch, a lip, a step, a slot, and a projection. The deformation can run around the entire periphery of the disk or can be offset from the edge towards the center by a predetermined distance. Moreover, instead of running around the entire periphery of the disk, continuously, the deformation could be periodically spaced around the periphery or edge of the disk, e.g., a notch every predetermined number of degrees around the edge of the disk.

## Description

### FIELD OF THE INVENTION

The present invention relates to a disk cartridge containing a flexible recording disk, and more particularly, to techniques for stabilizing the flexible disk within the cartridge during high speed rotation.

### BACKGROUND OF THE INVENTION

Removable disk cartridges for storing digital electronic information typically comprise an outer casing or shell that houses a rotatable recording medium, or disk, upon which electronic information can be stored. The cartridge shell often comprises upper and lower halves that are joined together to house the disk. The disk is mounted on a hub that rotates freely within the cartridge. When the cartridge is inserted into a disk drive, a spindle motor in the drive engages with the disk hub in order to rotate the disk within the cartridge. The outer shell of the cartridge typically has some form of opening near its forward edge to provide the recording heads of the drive with access to the recording surfaces of the disk. A shutter or door mechanism is often provided to cover the opening when the cartridge is not in use to prevent dust or other contaminants from entering the cartridge and settling on the recording surface of the disk.

Many prior art disk cartridges and associated disk drive mechanisms, such as those disclosed in U.S. Patent Nos. 4,503,474, 5,218,503 and 5,262,918, employ magnetic hard disk technology, i.e., the cartridges contain rigid magnetic media. An advantage of using a rigid magnetic disk is that the disk is relatively stable during high speed rotation in the disk drive. The magnetic heads of the drive "fly" closely over the recording surface to achieve increased storage densities with little or no wear on the recording surface. Removable hard disk cartridges typically have capacities in the hundreds of megabytes. However, hard disk media are relatively expensive thereby undesirably increasing the cost of these removable hard disk cartridges. The same drawbacks are generally true of optical disk cartridges as well.

Conventional floppy disk cartridges, such as the standard 3.5" floppy disk cartridge used in most personal computers, employ a flexible recording medium (i.e., floppy disk) and are generally cheaper to manufacture than the aforementioned hard disk cartridges. However, in a conventional floppy disk drive, the floppy disk is rotated at relatively low speeds (e.g., 300-720 rpm), and the magnetic heads of the drive apparatus contact the disk surface as it rotates in the drive. Because of the low rotation speeds, the performance of these floppy disk cartridges is greatly reduced. Additionally, a conventional floppy disk usually can store only a few. megabytes of information. Moreover, because the magnetic heads of a conventional floppy disk drive contact the floppy disk surface, the heads wear on the disk as it rotates.

One type of prior art cartridge that employs flexible media but attains increased storage capacity and higher performance is referred to in the art as a "Bernoulli" cartridge. These cartridges employ a "Bernoulli" surface or plate to stabilize the rotating flexible disk during high speed rotation. As the flexible disk is rotated at high speeds (e.g., 2400 rpm) over the Bernoulli plate, an air bearing is created between the flexible magnetic disk and the rigid Bernoulli surface such that a predictable spacing between the Bernoulli surface and the magnetic disk is established. Once the flexible magnetic disk is stabilized, a specially designed recording head can be brought into close proximity to the rotating disk to achieve increased recording densities and high performance. Unfortunately, however, two sided recording with opposing read/write heads on the same disk is extremely difficult. Furthermore, Bernoulli cartridges and drives require very tight manufacturing tolerances and are therefore relatively expensive to manufacture.

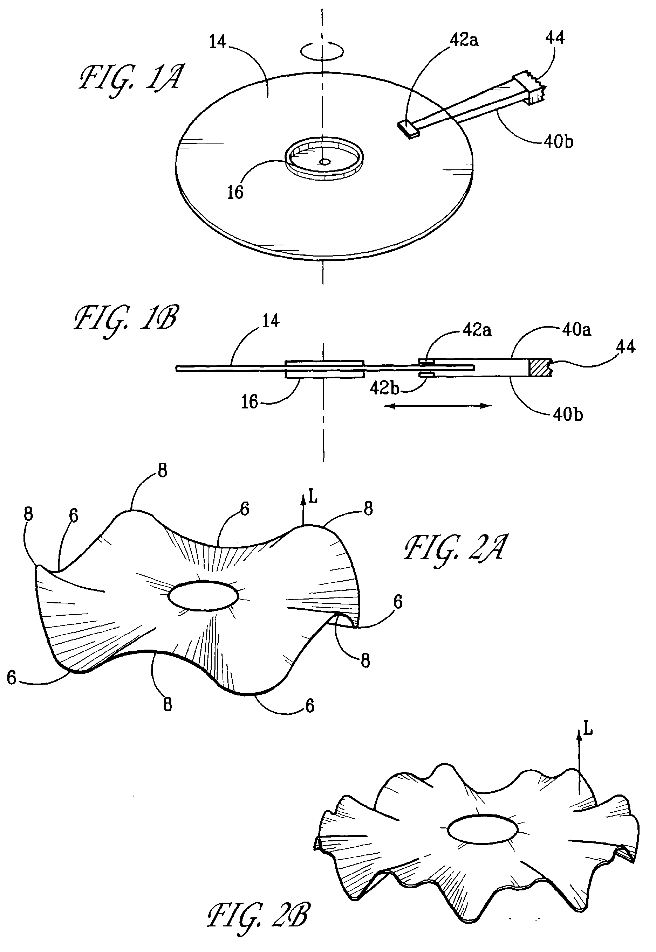

Recently, there have been attempts to employ hard disk type recording heads (e.g., Winchester heads) on flexible disk media. The combination of hard disk type recording heads and flexible recording media promises to provide relatively low cost storage capabilities. Such a combination is illustrated in Figures 1A and 1B. The flexible disk is rotated at relatively high speeds, e.g., 3600 rpm, and the hard disk type recording heads 42a, 42b are positioned on opposite sides of the flexible media. The heads 42a, 42b are disposed on respective suspension arms 40a, 40b that are springably biased toward each other. As the flexible media rotates, an air bearing is created between the heads and respective disk surfaces that opposes the tendency of the heads to move together. As a result, the heads "fly" closely over the surface of the flexible disk. Because the magnetic heads 42a, 42b are biased toward each other and would clamp together in the absence of the opposing forces created by the aerodynamics of the spinning media, they are sometimes referred to herein as "pinching-type" heads.

High speed magnetic recording using hard disk type heads on flexible disk media has been greatly limited, however, due to the dynamics of a rotating disk subjected to a spatially fixed load, such as that imposed by the recording heads of a disk drive. A spinning flexible disk will deflect in the axial direction under an external transverse load in such a fashion that a standing wave pattern is established in the media, i.e., the disk achieves resonance. Figures 2(a) and 2(b) are exaggerated illustrations of a rotating disk 14 in which standing wave patterns have been established due to an external transverse load, L. As illustrated in the Figures, the standing wave pattern is characterized by a series of "peaks" 8 and "valleys" 6. The number of peaks and valleys and their angular relationship to the load, define the "mode" of the standing wave. A more detailed discussion of the behavior of a rotating flexible disk under an external transverse load can be found in Benson, R.C. & Takahashi, T.T., *Mechanics of Flexible Disks in Magnetic Recording,* Adv. Info. Storage Syst., Vol 1., pp. 15-35 (ASME 1991) and in Benson, R.C. & Bogy, D.B., *Deflection of a Very Flexible Spinning Disk Due to a Stationary Transverse Load,* Transactions of the ASME, Vol. 45 (September 1978), both of which are incorporated herein by reference.

Depending on the mechanical properties of the flexible disk and the radial and vertical positions of the recording heads (i.e., load) with respect to the axis of the disk, the "mode" or pattern of the standing wave will vary. As the standing wave transitions from one mode to another, for example, from the mode illustrated in Figure 2(a) to that illustrated in Figure 2(b), the disk undergoes a phenomenon know as "disk snap". Under certain conditions, the disk will undergo violent vibration as it tries to switch back and forth between two different modes. Such violent vibration will adversely affect the head-disk interface making recording and/or retrieval of information unreliable and also creating a potential for damage to the recording heads or disk surface. Another manifestation of the "disk snap" problem is that a given disk may exhibit different modes in different drives, such that the magnetic read/write signal strength may vary. This greatly undermines the advantages of removability. The problem becomes even more acute as the speed of rotation of the disk is increased above 3600 rpm. Accordingly, if high speed recording on flexible disks using hard-disk type recording heads is to be successful, a mechanism is needed for stabilizing the media so that the standing wave pattern, or mode, does not change as the heads move radially on the disk.

Thus, high speed magnetic recording using a flexible disk has been greatly limited due to disk resonance under a spatially fixed load such as the recording heads. A spinning flexible disk under an external load will deflect in the axial direction in such a fashion that a standing wave pattern is established, i.e., resonance. Depending on the mechanical property of the disk and the alignment between the disk and the external load, the number of the standing wave peaks and valleys and their angular relationship to the load varies. Therefore, the flying attitude of different recording head and disk pairs will be different and uncontrollable. This phenomenon worsens as the speed increases. Under extreme conditions, the disk can undergo unstable vibration as it tries to decide which standing wave forms to assume. To avoid disk resonance, various kinds of means have been employed.

Prior art techniques for stabilizing a flexible disk during high speed rotation are either impractical or simply do not address the standing wave problem. For example, As disclosed in U.S. Patent No. 4,419,704, a fixed Bernoulli is used to face one surface of the disk. While a Bernoulli plate will stabilize a flexible disk and reduce the amplitude of a standing wave, the close spacing between the disk and Bernoulli plate (in the range of 100 µm) makes two sided recording extremely difficult. Moreover, very tight manufacturing tolerances must be observed in the production of Bernoulli cartridges, thereby increasing the cost of such cartridges. Furthermore, a special negative air pressure head design has to be employed to capture the disk and overcome the effect of disk resonance.

Another prior art approach to disk stabilization is the stretched surface disk. In this approach, the outer rim of the disk is clamped and under tension. The stress can be adjusted to suppress any standing waves. However, the inertia of the rotating body is large, and like the Bernoulli cartridges, two sided recording on a single disk cannot be achieved.

U.S. Patent No. 5,189,574 describes a technique that purports to stabilize a rotating flexible disk at speeds of about 3600 rpm. According to the disclosed technique, the disk is rotated between a pair of opposing "stationary plates" each separated from the surface of the disk by a distance of about 400-800 µm. The '574 patent theorizes that the stationary plates serve to prevent the occurrence of turbulent air flow near the surface of the disk thereby reducing disk vibration and achieving stabilization. While some stabilization may be achieved, this technique fails to address the mode stabilization problem, since the elimination of turbulent flow near the surface of a disk cannot suppress the changes in standing wave patterns described above.

Accordingly, there is a need for a removable disk cartridge capable of stabilizing the standing wave pattern, or mode, of a flexible recording disk rotating at high speeds in order to prevent "disk snap" and avoid disk resonance.

### SUMMARY OF THE INVENTION

The present invention is directed to an edge stiffener, such as an annular ring, that is attached to a disk. The annular ring is attached to the disk at its outer periphery, for example. The annular ring preferably comprises a polyester film and is preferably attached to the disk by pressure sensitive adhesives, but can be attached using any suitable means. The annular ring causes at least one standing wave to form and prevents mode snap. The annular ring can be attached to one side of the disk, or to both sides of the disk.

Alternatively, instead of using an annular ring, the disk can be deformed, for example at its outer edge or periphery, to provide the desired additional stiffness and vibration suppression ability. Exemplary deformations include a channel, a notch, a lip, a step, a slot, and a projection. The deformation can run around the entire periphery of the disk or can be offset from the edge towards the center by a predetermined distance. Moreover, instead of running around the entire periphery of the disk, continuously, the deformation could be periodically spaced around the disk, e.g., a notch every predetermined number of degrees around the edge of the disk.

### BRIEF DESCRIPTION OF THE DRAWINGS

The foregoing summary, as well as the following detailed description of the preferred embodiments, is better understood when read in conjunction with the appended drawings. For the purpose of illustrating the invention, there is shown in the drawings embodiments that are presently preferred, it being understood, however, that the invention is not limited to the specific methods and instrumentalities disclosed. In the drawings:
Figures 1(a) and 1(b) illustrate the use of hard disk type recording heads on a flexible recording medium;
Figures 2(a) and 2(b) each show a rotating flexible disk in which a standing wave pattern, or mode, has been established due to an external transverse load;
Figure 3 is a perspective view of a disk cartridge in accordance with a preferred embodiment of the present invention;
Figure 4 is a top view of the disk cartridge of Figure 1;
Figure 5 shows a sectional view of the disk cartridge of Figure 4 taken along line 5-5 of Figure 4 and further shows a disk drive spindle motor to which a hub of the disk cartridge may be engaged;
Figure 6 shows a cross-sectional view of a disk having an exemplary annular ring in accordance with the present invention;
Figure 7 shows a bottom view of the disk having the exemplary annular ring of Figure 6; and
Figures 8 , 9, and 10 show cross-sectional views of disks having exemplary disk edge deformations in accordance with the present invention.

### DETAILED DESCRIPTION OF THE PREFERRED EMBODIMENTS

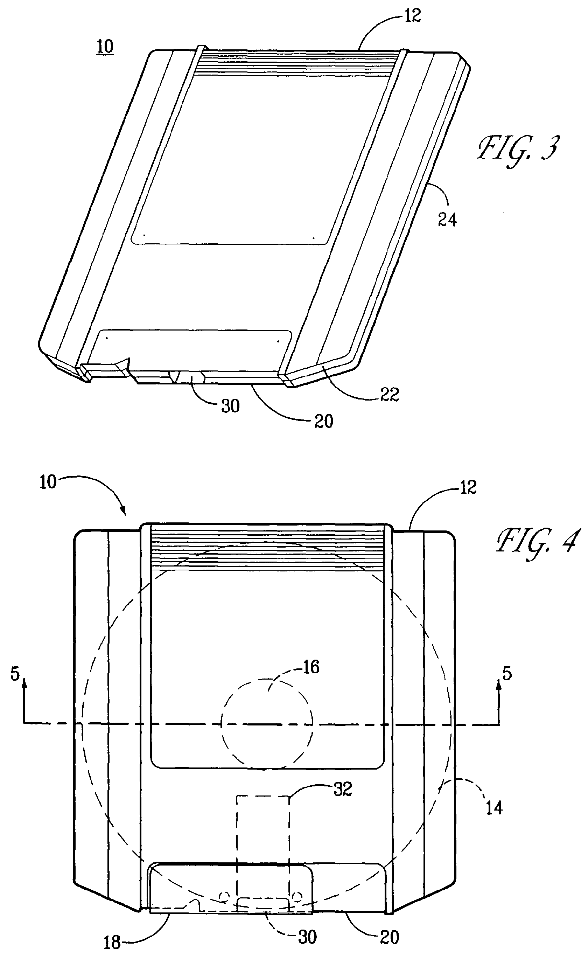

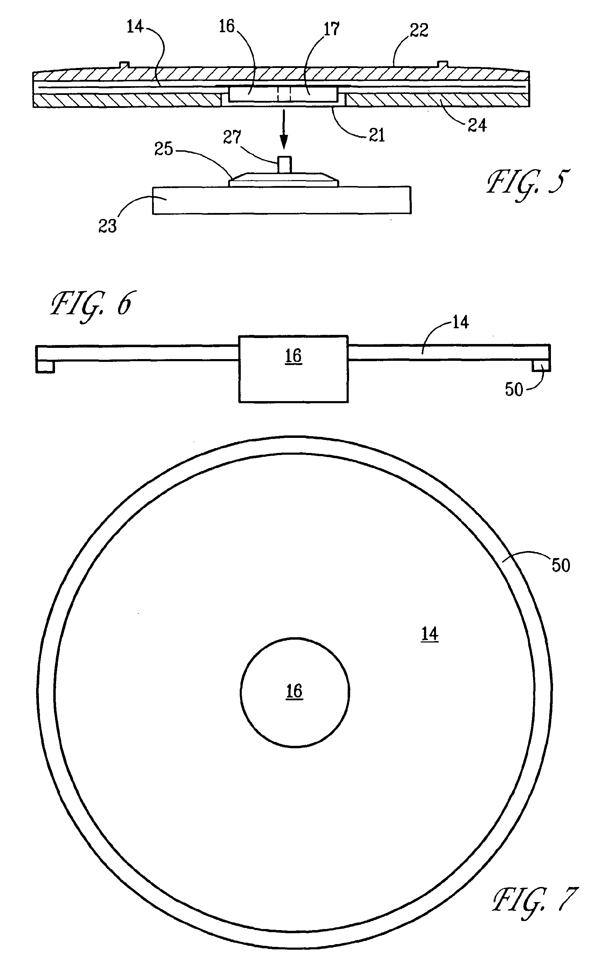

Referring to the drawings wherein like numerals indicate like elements throughout, there is shown in Figures 3 and 4 a disk cartridge 10 comprising an outer casing 12 and a disk 14 having a hub 16 rotatably mounted in the casing 12. The casing 12 comprises upper and lower shells 22, 24 that mate to form the casing 12. A shutter 18 (Fig. 4) is provided on the cartridge 10 to cover a head access opening 30 in the front peripheral edge 20 of the casing 12 when the cartridge 10 is not in use. When the cartridge 10 is inserted into a disk drive (not shown), the shutter 18 moves to the side exposing the head access opening 30 and thereby providing the read/write heads (not shown) of the disk drive with access to the recording surface(s) of the disk 14. In the present embodiment, the disk 14 comprises a flexible or floppy magnetic disk that is formed of a thin (e.g. 0.0025 inches), flexible, circular base of polymeric film. Each side of the flexible disk is coated with a layer of magnetic recording material to form upper and lower recording surfaces.

Figure 5 is a sectional view of the disk cartridge of Figures 3 and 4 taken along line 5-5 of Figure 4. As shown, the lower shell 24 of the cartridge has an opening 21 through which the hub 16 of the flexible disk may be accessed. Figure 5 further illustrates the components of a spindle motor mechanism that may be mounted in a disk drive apparatus (not shown) in order to rotate the flexible disk at high speeds. As shown, the spindle motor mechanism comprises a generally circular spindle 25 that mates with the hub 16 of the disk cartridge 10 when the disk cartridge is inserted into the disk drive. A cylindrical projection 27 on the spindle 25 engages a cylindrical hole 17 in the disk hub 16 to ensure proper centering of the flexible disk on the spindle 25. A motor 23 coupled to the spindle 25 rotates the flexible disk 14 at speeds in excess of about 1800 rpm, and more preferably, at speeds of 3600 rpm or greater. A preferred disk drive apparatus that incorporates the spindle motor mechanism, and in which the disk cartridge of the present invention may be employed, is disclosed in U.S. Patent No. 5,650, 891, entitled "Apparatus for Performing Multiple Functions in a Data Storage Device Using a Single Electro-Mechanical Device", which is hereby incorporated by reference.

According to the present invention, an edge stiffener, such as an annular ring 50, is attached to the disk 14, preferably at its outer periphery, although the ring 50 can be located elsewhere on the disk 14. Figures 6 and 7 show a cross-sectional view and a bottom view, respectively, of the disk 14 with an exemplary annular ring 50. The annular ring preferably comprises a polyester film, such as Mylar, has a width of about 0.5 mm and a height of about 0.025 mm for a flexible disk drive with 3.5 inch outside diameter and operation speed up to 4000 rpm. The annular ring is preferably attached to the periphery of the disk 14 by pressure sensitive adhesives, but can be attached using any suitable means. In this case, at least one standing wave is expected to form and mode snap is eliminated.

The annular ring 50 adds to the disk stiffness due to the increased material thickness at the disk outside diameter where the amplitude of the standing wave is otherwise a maximum. The annular ring 50 also increases centrifugal stretching of the disk associated with the added mass at the disk outer periphery.

For the purpose of standing wave suppression, a stiffer material is desirable. An annular ring made from sheets of stainless steel is able to prevent standing wave formation and mode snap up to a much higher spin speed than an annular ring made from polyester film that has the same geometry. On the other hand, any initial distortion (such as curl) in a stainless steel annular ring will most likely remain in operation and cause unwanted runout while similar distortion in a polyester film will be greatly reduced in operation due to centrifugal stretching. Therefore, the requirement on a stainless steel annular ring will be more stringent than on a polyester film annular ring.

For an annular ring having thickness h and width b, its bending stiffness (i.e., the resistance to the formation of the standing wave on the disk) is proportional to width b and cubic power of height h. Therefore, the gain in stiffness by doubling the height is four times greater than doubling the width. It is desirable to have a thicker annular ring when possible. The upper limit on the height of the annular ring is bounded by such practical matters as head loading and potential rubbing between the annular ring and other parts in the drive or cartridge. The upper limit on the width of the annular ring is typically determined by the requirement on the size of the data band.

Although the annular ring edge stiffener is shown in Figures 6 and 7 as being attached to the bottom of the disk, it can be attached to the top of the disk, or to both the top and bottom of the disk.

The material properties, the width and the thickness of the stiffener can be varied depending on the size of the data recording band and the desired effect of vibration suppression.

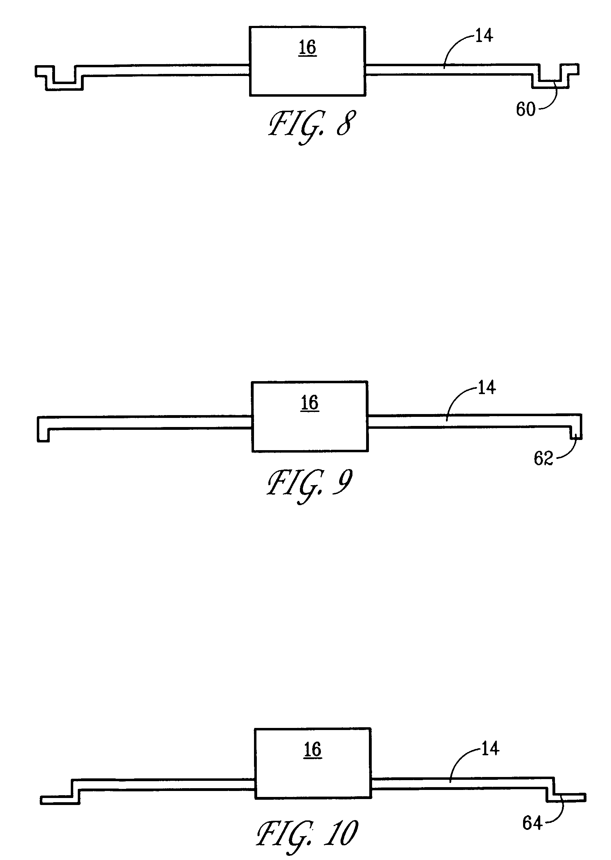

Alternatively, instead of using an annular ring, the disk can be deformed, preferably at its outer edge or periphery, to provide the desired additional stiffness and vibration suppression ability. One exemplary deformation 60 is shown, in cross-section, in Figure 8, where the deformation is a channel or a notch. Additional deformation shapes 62, 64 are shown in Figures 9 and 10 as a lip and a step, respectively. Further deformation shapes include slots or projections. The deformation can be easily and cost effectively achieved during the disk punching process. The deformation can run around the entire periphery of the disk or can be offset from the edge towards the center by a predetermined distance. Moreover, instead of running around the entire periphery of the disk, continuously, the deformation could be periodically spaced around the periphery or edge of the disk, e.g., a notch or projection every predetermined number of degrees around the edge of the disk.

It is understood that the size, shape, number and arrangement of edge stiffeners shown in Figures 5-10 represent preferred embodiments, and the present invention is by no means limited thereto. Other sizes, shapes, numbers and arrangements of edge stiffeners may be employed as needed.

Additionally, while the present invention has been illustrated in connection with a disk drive having recording heads 42a, 42b disposed on the suspension arms 40a, 40b of a linear actuator, the resonance prevention techniques of the present invention can be employed in disk drives having rotary actuators as well. Furthermore, the resonance prevention technique of the present invention can be employed in disk cartridges having multiple flexible recording disks in a stacked arrangement.

Thus, the present invention provides a cheap and easy disk for two sided recording as compared to the Bernoulli technology and the stretched media technology. Moreover, the present invention provides a means for two sided recording at high speed as compared to the standard floppy technology. The present invention also provides extremely low rotating inertia as compared to the stretched media technology resulting in faster access time.

It is understood that changes may be made to the embodiments described above without departing from the broad inventive concepts thereof. Accordingly, the present invention is not limited to the particular embodiments disclosed, but is intended to cover all modifications that are within the spirit and scope of the invention as defined by the appended claims.

## Claims

1. A removable disk cartridge for a disk drive, comprising:
a rotatable flexible disk having at least one recording surface;
an outer casing for rotatably housing the disk, the casing comprising upper and lower shells that mate to form the casing; and
an edge stiffener attached to a first side of the disk.

2. The removable disk cartridge of claim 1, wherein the edge stiffener is an annular ring.

3. The removable disk cartridge of claim 1, wherein the edge stiffener comprises a polyester film.

4. The removable disk cartridge of claim 1, wherein the edge stiffener comprises stainless steel.

5. The removable disk cartridge of claim 1, further comprising a pressure sensitive adhesive disposed between the edge stiffener and the disk, the adhesive attaching the edge stiffener to the disk.

6. The removable disk cartridge of claim 1, wherein the annular ring forms a standing wave pattern in the disk when the disk rotates within the casing and prevents mode snap.

7. The removable disk cartridge of claim 1, wherein the edge stiffener is attached to an outer periphery of the first side of the disk.

8. The removable disk cartridge of claim 1, further comprising a second edge stiffener attached to a second side of the disk.

9. The removable disk cartridge of claim 8, wherein the second edge stiffener is attached to an outer periphery of the second side of the disk.

10. A removable disk cartridge for a disk drive, comprising:
a rotatable flexible disk having at least one recording surface and a deformation to provide stiffness; and
an outer casing for rotatably housing the disk, the casing comprising upper and lower shells that mate to form the casing.

11. The removable disk cartridge of claim 10, wherein the deformation is disposed around the periphery of the disk.

12. The removable disk cartridge of claim 10, wherein the deformation forms a standing wave pattern in the disk when the disk rotates within the casing and prevents mode snap.

13. The removable disk cartridge of claim 10, wherein the deformation comprises at least one of a notch, a channel, a step, a lip, a slot, and a projection.

14. The removable disk cartridge of claim 10, wherein the deformation is offset towards the center of the disk a predetermined distance.

15. A removable disk cartridge for a disk drive, comprising:
a rotatable flexible disk having at least one recording surface and a plurality of notches or projections disposed periodically on the disk; and
an outer casing for rotatably housing the disk, the casing comprising upper and lower shells that mate to form the casing.

16. The removable disk cartridge according to claim 15, wherein the plurality of notches or projections are disposed periodically around the periphery of the disk.

17. The removable disk cartridge according to claim 15, wherein the notches or projections are offset towards the center of the disk a predetermined distance.

18. The removable disk cartridge of claim 15, wherein the notches or projections form a standing wave pattern in the disk when the disk rotates within the casing and prevents mode snap.
